(19) Europäisches Patentamt
European Patent Office
Office européen des brevets

(11) Publication number: 0 191 605 A2

# (12) EUROPEAN PATENT APPLICATION

(21) Application number: 86300815.7

(22) Date of filing: 06.02.86

(51) Int. Cl.[4]: C 08 F 214/26, C 08 F 2/18

(30) Priority: 07.02.85 US 699143
20.12.85 US 809673

(43) Date of publication of application: 20.08.86
Bulletin 86/34

(84) Designated Contracting States: DE GB IT NL

(71) Applicant: E.I. DU PONT DE NEMOURS AND COMPANY, 1007 Market Street, Wilmington Delaware 19898 (US)

(72) Inventor: Morgan, Richard Alan, 4708 7th Avenue, Vienna West Virginia 26105 (US)

(74) Representative: Myerscough, Philip Boyd et al, J.A.Kemp & Co. 14, South Square Gray's Inn, London, WC1R 5EU (GB)

## (54) Process for copolymerization of tetrafluoroethylene.

(57) In the polymerization ot tetrafluoroethylene and comonomers to make melt-processible copolymers, the presence of perfluorononanoic acid or selected salts thereof enhances process performance.

EP 0 191 605 A2

TITLE

# PROCESS FOR COPOLYMERIZATION OF TETRAFLUOROETHYLENE

This invention relates to an improvement in the copolymerization of tetrafluoroethylene and at least one ethylenically unsaturated comonomer, such as hexafluoropropylene (HFP), perfluoropropyl vinyl ether (PPVE) or a mixture of them, to make melt-fabricable copolymers.

The copolymerization of tetrafluoroethylene (TFE) and ethylenically unsaturated comonomers to make melt-fabricable, i.e. melt-processible, copolymers can be carried out in an aqueous reaction medium in the presence of a dispersing agent and an initiator. A commonly employed dispersing agent for this polymerization is ammonium perfluorooctanoate, $C_7F_{15}COONH_4$. Use of other dispersing agents with superior performance has long been a goal.

The invention provides a process for the polymerization of tetrafluoroethylene with at least one ethylenically unsaturated comonomer in an aqueous medium in the presence of an initiator and a dispersing agent, to obtain a melt-processible copolymer having up to 20 mole percent comonomer units, characterised in that there is used as the dispersing agent a perfluorinated nonanoic acid or salt thereof of the formula

$$n\text{-}C_8F_{17}\text{-}COOM$$

wherein M is hydrogen, ammonium or an alkali metal, said dispersing agent being present in an amount between 0.02% and 0.5 wt % based on final product dispersion.

The use of the perfluorononanoic acid or salt as dispersing agent in the copolymerization surprisingly provides higher comonomer incorporation at a given polymerization rate than the octanoate recited above, or conversely provides a higher polymerization rate at a given comonomer content. Mixtures of such nonanoates may be employed if desired.

0191605

## DESCRIPTION OF THE INVENTION

The copolymerization of tetrafluoroethylene and the comonomers specified to produce melt-fabricable copolymers is well known in the art. Tetrafluoroethylene monomer, along with an ethylenically unsaturated comonomer, is typically reacted in an aqueous medium containing a polymerization initiator and a dispersing agent. Ordinarily, the gaseous monomers are introduced into the aqueous medium under pressure. Typical conditions include polymerization temperatures of 20-120°C preferably 70-110°C; and pressures of 0.7-5.5 MPa, preferably 2.1-4.5 MPa. The polymerization is ordinarily carried out in a stirred autoclave.

Representative fluorinated ethylenically unsaturated comonomers copolymerizable with tetrafluoroethylene are represented by the formulas:

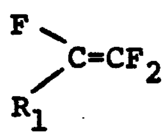 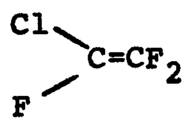 or 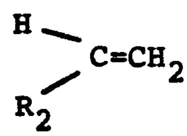

wherein $R_1$ is $-R_f$, $-R_f-X$, $-O-R_f$ or $-O-R_f-X$ in which $R_f$ is a perfluoroalkyl radical of 1-12 carbon atoms, $-R_f-$ is a perfluoroalkylene diradical of 1-12 carbon atoms in which the attaching valences are at each end of the chain, and X is H or Cl; and $R_2$ is $-R_f$ or $-R_f-X$.

Specific copolymerizable fluorinated ethylenically unsaturated comonomers include hexafluoropropylene, perfluoro(methyl vinyl ether), perfluoro(n-propyl vinyl ether), perfluoro(n-heptyl vinyl ether), 3,3,3-trifluoropropylene-1, 3,3,4,4,5,5,6,6,6-nonafluorohexene-1, 3-hydroperfluoro(propyl vinyl ether), or mixtures thereof, such as a mixture of hexafluoropropylene and

perfluoro(propyl vinyl ether). Preferably the comonomers are selected from perfluoro(alkyl vinyl ethers) of the formula $R_f$-O-CF=CF$_2$, or hexafluoropropylene, or compounds of the formula $R_f$-CH=CH$_2$, wherein -$R_f$ is a perfluoroalkyl group of 1-12 carbon atoms.

Comonomer content can range from 0.5 mole percent up to about 20 mole percent, and more than one comonomer can be present.

The polymerization initiator may be any free radical-producing compound such as a peroxide, persulfate, azo compound and the like which has a half-life under the reaction conditions which is sufficient to maintain reaction and achieve the desired molecular weight. A promoter for the initiator decomposition, such as iron salts, may be employed. The amount of initiator employed depends on the temperature of polymerization, the nature of the initiator, the presence of a chain-transfer agent or molecular weight modifier, the molecular weight of the polymer desired, and the rate of reaction desired. Thus, the amount of initiator used is dictated by the molecular weight and polymerization rate desired. The chain transfer agent or molecular weight modifier may be a 1-15 carbon saturated hydrocarbon or alcohol, which may be partially fluorinated or chlorinated.

The amount of perfluorononanote acid or salt thereof which is added to the polymerization reactor will depend on the weight of the water and expected polymer. In general, a higher concentration of dispersing agent will be needed with higher expected polymer concentration in the final dispersion. In addition the amount of dispersing agent will also depend on the degree of dispersion stability

desired. Typically the polymer in the final product dispersion will amount to 15-45 wt % and the dispersing agent concentration will range from 0.02 to 0.5 weight percent of the final product dispersion, preferably 0.05 to 0.2 weight percent. The dispersing agent is usually added prior to initiation of polymerization.

It is recognized that the solubility and thus the usefulness of the surfactants and its salts will depend on the pH of the reaction medium and any presence of other salts.

A solvent for the monomers and possibly for the initiator may be added to the reaction mixture. This solvent may be 1,1,2-trichloro-1,2,2-trifluoroethane, 1,2-dichloro-1,1,2,2-tetrafluoroethane, trichlorofluoromethane, dichlorodifluoromethane, or perfluorocyclobutane.

By the term "melt-fabricable" is meant that the polymers have an apparent melt viscosity of less than $1 \times 10^7$ poise at 372°C. Melt viscosity of the tetrafluoroethylene copolymers is measured according to ASTM D-1238-52T modified by (1) using a cylinder, orifice and piston tip made of a corrosion-resistant alloy, Haynes Stellite 19, (2) charging a 5.0 g sample to the 9.53 mm inside diameter (I.D.) cylinder which is maintained at 372°C $\pm$ 1°C, (3) five minutes after charging, extruding the sample through a 2.10 mm diameter, 8.00 mm long square-edged orifice under a load (piston plus weight) of 5000 g (this corresponds to a shear stress of 0.457 $kg/cm^2$, 44.8 kPa). The melt viscosity in poise is calculated as 53170 divided by the observed extrusion rate in grams per minute.

Ordinarily the amount of comonomer units present in the copolymer will be an amount sufficient

to afford satisfactory resin mechanical properties. For HFP that will be between 6 and 9 mole percent, for PPVE that will be between 0.4 and 10 mole percent.

Higher comonomer incorporation in these copolymers is advantageous to enhance certain resin physical properties. Higher polymerization rates are desirable to maximize production rates. In addition, the polymerization reactor is found to be very easy to clean after ammonium perfluorononanoate dispersing agent is used.

In the Examples, comonomer content was determined as follows:

The HFP content in the TFE/HFP copolymers described herein is determined by measurement of the ratio of the infrared absorbance at 10.18 micrometers to the absorbance at 4.25 micrometers. This ratio is referred to as the HFP index or HFPI. Reference films of known HFP content, as determined by F19 NMR, are also run to calibrate the HFPI. The mole percent HFP present is equal to 2.1 times the HFPI. Compression-molded films approximately 0.10-0.11 mm thick are scanned under a nitrogen atmosphere.

The PPVE content in the TFE/PPVE copolymers described herein is also determined by infrared spectroscopy. The ratio of absorbance at 10.07 micrometers to that at 4.25 micrometers is determined under a nitrogen atmosphere using films approximately 0.05 mm thick. The films are compression molded at 350°C, then immediately quenched in ice water. This absorbance ratio is then used to determine percent PPVE by means of a calibration curve established with reference films of known PPVE content. F19 NMR is used as the primary standard for calibrating the reference films.

For TFE/HFP/PPVE terpolymers, some of the absorption bands overlap, and corrections must be

made in the analysis, as described in U.S. Patent No. 4,029,868.

The Examples hereinbelow describe the invention in greater detail.

Example 1 and Comparison A

A cylindrical, horizontally disposed, water-jacketed, stirred, stainless steel reactor having a length to diameter ratio of about 1.5 and a water capacity of 80 parts was charged with 55 parts of water and 0.077 parts of dispersing agent. The mixture was heated to 65°C and then the reactor was evacuated and purged with tetrafluoroethylene (TFE). The reactor temperature was then raised to 95°C and agitation begun at 34 rpm. The reactor was pressured to the desired level (370 psig or 2.6 MPa) with comomoner (HFP) and then to 600 psig (4.1 MPa) with TFE. A freshly prepared solution (1.32 parts) of 0.015 M ammonium persulfate initiator was added to the reactor at the rate of 0.11 parts/minute to initiate polymerization and then a 0.037 M potassium persulfate initiator solution was added at the rate of 0.022 parts/minute for the remainder of the batch. After polymerization started, as indicated by a 0.07 MPa (10 psi) pressure drop, additional TFE was added to the reactor at the rate of 0.115 parts/minute until 13.0 parts of additional TFE had been added. The agitator speed was varied to control monomer transfer to the liquid phase and thus maintain a constant 600 psig (4.1 MPa) pressure level. The reactor temperature was maintained at 95°C.

At the end of the reaction, the TFE feed and the agitator were turned off. Cooling water was circulated through the reactor jacket and the reactor was vented. The addition of initiator solution was

stopped, the reactor was purged of any residual monomer with nitrogen, and the aqueous copolymer dispersion was discharged. The dispersion was coagulated by vigorous stirring to obtain a melt-fabricable TFE/HFP copolymer fluff which was dried before analyses were carried out.

The example and comparison are summarized in Table I. The higher HFP content obtained using the ammonium perfluorononanoate dispersing agent (designated C-9) of this invention relative to ammonium perfluorooctanoate (designated C-8) is demonstrated in the Table.

0191605

TABLE I

| Example or Comparison | Dispersing Agent Employed | Dispersing Agent* wt. % | HFP Partial Pressure | Average Agitator Speed (rpm) | Mole % HFP in Copolymer |
|---|---|---|---|---|---|
| Comparison A | C-8 | 0.103 | 2.6 MPa | 33 | 7.04 |
| Example 1 | C-9 | 0.103 | 2.6 MPa | 33 | 7.56 |

*based on final dispersion weight

EXAMPLE 2 AND COMPARISON

The same reactor described in Example 1 and Comparison A was charged with 48 parts of demineralized water, and 0.080 parts ammonium carbonate, and 0.066 parts of ammonium perfluorononanoate. The reactor was closed, evacuated and purged with tetrafluoroethylene (TFE) three times and evacuated again, all with about a 20°C reactor temperature. Ethane was introduced until a 13.5 kPa rise in pressure occurred. Then 0.56 parts of perfluoropropyl vinyl ether (PPVE) and 1.19 parts of FREON® 113 ($CCL_2FCClF_2$) were entered into the reactor. The agitator was turned on and the contents heated to 80°C. The reactor was pressurized to 2.2 MPa (300 psig) with TFE and simultaneously a solution (1.19 parts) of 0.011 M ammonium persulfate initiator was pumped into the reactor. After polymerization kickoff had occurred (0.07 MPa or 10 psi drop in pressure), additional PPVE and a 0.005 M APS solution were pumped to the reactor for the remainder of the polymerization at the rates of 0.20 parts per hour and 1.32 parts per hour, respectively. The agitator speed was varied to control the reaction rate so that 0.1 parts per minute of additional TFE was needed to maintain a constant 2.2 MPa (300 psig) pressure. After 15.4 parts of TFE had been added (measured after kickoff), the TFE and PPVE feeds were stopped and the agitator was turned off. The initiator solution continued to be pumped until the reactor was vented of unreacted monomer. The reactor was purged of any residual monomer with nitrogen and the aqueous copolymer dispersion was discharged. The amount of dispersing agent used was 0.093 wt % based on final product dispersion. The dispersion was coagulated and dried

0191605

as in Example 1 before analysis. Analysis showed it had a melt viscosity at 372°C of $6.0x10^4$ poise and it contained 1.45 mole percent PPVE.

The identical procedure to the above was followed except that the ammonium perfluorononanoate was replaced by the same weight of ammonium perfluorooctanoate. In this case, the melt viscosity was $10.2x10^4$ poise and the PPVE content of the polymer was found to be only 1.07 mole percent.

CLAIMS

1. A process for the polymerization of tetrafluoroethylene with at least one ethylenically unsaturated comonomer in an aqueous medium in the presence of an initiator and a dispersing agent, to obtain a melt-processible copolymer having up to 20 mole percent comonomer units, characterised in that there is used as the dispersing agent a perfluorinated nonanoic acid or salt thereof of the formula

$$n\text{-}C_8F_{17}\text{-}COOM$$

wherein M is hydrogen, ammonium or an alkali metal, said dispersing agent being present in an amount between 0.02% and 0.5 wt % based on final product dispersion.

2. A process according to Claim 1 wherein the dispersing agent is present in an amount of between 0.05% and 0.2% based on final product dispersion.

3. A process according to Claim 1 or 2 wherein a non-water-soluble solvent is also present during polymerization.

4. A process according to Claim 1, 2 or 3 wherein a molecular weight modifier is also present during polymerization.